# EUROPEAN PATENT APPLICATION

(11) **EP 4 793 145 A1**
(43) Date of publication of application: **19.08.2026**
(21) Application number: 26154068.6
(22) Date of filing: 26.01.2026
(51) Int. Cl.: B62D 25/20, B60K 1/04

(54) **VEHICLE LOWER PORTION STRUCTURE**

(30) Priority: 14.02.2025 JP 2025021971
(71) Applicant: MAZDA MOTOR CORPORATION, Hiroshima 730-8670 (JP)
(72) Inventor: Eiji, Kamemoto, Aki-gun, Hiroshima, 730-8670 (JP); Hirotaka, Natsume, Aki-gun, Hiroshima, 730-8670 (JP); Junichi, Tanaka, Aki-gun, Hiroshima, 730-8670 (JP); Tadashi, Yamazaki, Aki-gun, Hiroshima, 730-8670 (JP); Hideyuki, Tsukamoto, Aki-gun, Hiroshima, 730-8670 (JP); Satoshi, Nakamura, Aki-gun, Hiroshima, 730-8670 (JP); Daisuke, Kanamaru, Aki-gun,Hiroshima, 730-8670 (JP); Taiki, Yotsuyanagi, Aki-gun, Hiroshima, 730-8670 (JP)
(74) Representative: Lorenz Seidler Gossel Part. mbB

(57) **Abstract**

[Problem] The purpose of the present invention is to provide a vehicle lower portion structure capable of improving the strength of a vehicle equipped with a battery to withstand collision loads during both a side collision and a front collision of the vehicle.

[Means for Solution] A vehicle lower portion structure includes: a toeboard 18 that is disposed forward of a frontmost cross member 4A and is curved upward; a reinforcement member 20 for reinforcing the toeboard 18; and a battery 5 disposed under a plurality of cross members 4A to 4D. A rear end portion 20c of the reinforcement member 20 is affixed to the frontmost cross member 4A. The frontmost cross member 4A is affixed with a bolt 14 to an intermediate frame 13 extending in the vehicle front-rear direction of the battery 5.

## Description

### [Technical Field]

The present invention relates to a lower portion structure of a vehicle that has a battery in a lower portion of the vehicle.

### [Background Art]

For vehicles such as electric automobiles (EVs), a structure in which a battery is disposed under a floor panel is widely known. In order to protect the battery from collision loads during a front collision (when the vehicle is hit from the front) and a side collision (when the vehicle is hit from a side) of the vehicle, various structures for reinforcing the floor panel have been proposed.

In a structure described in Patent Literature 1, a floor tunnel is formed at the center in a vehicle width direction of the floor panel. The floor tunnel is reinforced by a reinforcement member extending in a vehicle front-rear direction.

In a structure described in Patent Literature 2, an inclined member is provided on an upper surface of the floor panel, the inclined member extending in a direction toward the center in the vehicle width direction as it extends toward the rear of the vehicle. The inclined member reinforces the floor panel.

### [Citation List]

### [Patent Literatures]

[Patent Literature 1] Japanese Unexamined Patent Publication No. 2022-168284
[Patent Literature 2] Japanese Unexamined Patent Publication No. 2021-095042

### [Summary of Invention]

### [Problems to be Solved by the Invention]

However, these vehicle lower portion structures have the problem of low strength to withstand a collision load during both a front collision (collision from the front) and a side collision (collision from a side) of the vehicle.

In other words, according to the aforementioned vehicle lower portion structures, when a collision load is input to a toeboard (a plate-shaped part curved upward toward the vehicle front) disposed forward of the floor panel in the event of a vehicle front collision, a structure for receiving the collision load during the front collision and the resulting withstanding strength are insufficient. Therefore, there is a risk that the toeboard cannot withstand the front collision load and the collision load during the front collision is transmitted to the battery.

Further, in the event of a vehicle side collision, a structure for receiving the collision load during the side collision with a cross member or the like extending in the vehicle width direction of the vehicle body and the resulting withstanding strength are insufficient. Therefore, there is a risk that the collision load during the side collision is transmitted to the battery. For an electric automobile without a floor tunnel in particular, the strength to withstand the side collision load is insufficient since the cross member is long. Consequently, the vehicle equipped with the battery does not have sufficient strength to withstand the collision load.

The present invention has been made in view of the above circumstances, and an object of the present invention is to provide a vehicle lower portion structure that can improve the strength of a vehicle equipped with a battery to withstand collision loads during both a side collision and a front collision of the vehicle.

### [Means for Solving the Problems]

In order to attain the object, a vehicle lower portion structure of the present invention includes: a plurality of cross members extending in a vehicle width direction of the vehicle and disposed spaced apart from each other in a vehicle front-rear direction; a toeboard that is disposed forward of a frontmost cross member among the plurality of cross members, and has a shape extending in the vehicle width direction and curved upward toward a vehicle front; a reinforcement member that is affixed in a range in the front-rear direction including a rear end portion of the toeboard to reinforce the toeboard; and a battery that includes a battery cells and a battery housing accommodating the battery cells, and is disposed under the plurality of cross members, the vehicle lower portion structure being characterized in that a rear end portion of the reinforcement member is affixed to the frontmost cross member, the battery has at least one intermediate frame extending in the front-rear direction within an area that is occupied by the battery housing in plan view, and the frontmost cross member is affixed to the intermediate frame.

According to this configuration, since the rear end portion of the reinforcement member for reinforcing the toeboard is affixed to the frontmost cross member, a collision load input to the reinforcement member during a vehicle front collision can be received by both the reinforcement member and the frontmost cross member. Moreover, since the frontmost cross member is affixed to the intermediate frame of the battery together with the reinforcement member, a collision load input to the frontmost cross member during a vehicle side collision can be received by a united body of the cross member, the reinforcement member, and the intermediate frame. As a result, for a vehicle equipped with a battery, it is possible to improve the strength to withstand both a side collision and a front collision of the vehicle. Thus, in this vehicle, the battery under the cross members can be reliably protected from collision loads.

In the vehicle lower portion structure, the reinforcement member preferably extends from the rear end portion of the toeboard toward the vehicle front.

According to this configuration, since the rigidity of the reinforcement member in the vehicle front-rear direction is high, the strength of the reinforcement member to withstand the collision load during the vehicle front collision is improved.

In the vehicle lower portion structure, the rear end portion of the reinforcement member is preferably affixed above a front end portion of the frontmost cross member.

According to this configuration, when the reinforcement member receives a collision load during a vehicle front collision, the reinforcement member is deformed in a direction of lifting the reinforcement member upward of the frontmost cross member, and thus it is possible to reduce the load transmitted to the battery under the cross members.

In the vehicle lower portion structure, a position where the reinforcement member and the frontmost cross member are affixed together is preferably located further forward in the vehicle than a position where the cross member and the intermediate frame are affixed together.

According to this configuration, the position where the cross member and the intermediate frame are affixed together can be freely set without being affected by the position where the reinforcement member and the frontmost cross member are affixed together. Therefore, the position where the cross member and intermediate frame are affixed together can be set to match the arrangement of components in a vehicle cabin (for example, an occupant protection foam pad on the floor).

Moreover, since a collision load received by the reinforcement member during a vehicle front collision is transmitted to the frontmost cross member and then to the intermediate frame of the battery, it is possible to reduce the load transmitted to the intermediate frame of the battery.

In the vehicle lower portion structure, the position where the reinforcement member and the frontmost cross member are affixed together may overlap the position where the cross member and the intermediate frame are affixed together in the vehicle front-rear direction and the vehicle width direction.

According to this configuration, since the collision load received by the reinforcement member during the vehicle front collision is transmitted to and distributed between both the frontmost cross member and the intermediate frame via the affixed position common to the reinforcement member, the frontmost cross member, and the intermediate frame, the strength of the entire vehicle to withstand the vehicle front collision can be improved.

In the vehicle lower portion structure, the frontmost cross member and the intermediate frame are preferably affixed together by fastening of a bolt.

According to this configuration, in the event of a front collision and a side collision of the vehicle, it is possible to reliably transmit the collision loads received by the frontmost cross member to the intermediate frame via the bolt, and it is possible to further improve the strength of the entire vehicle to withstand the vehicle front collision.

The vehicle lower portion structure preferably further includes a coupling member that extends in the vehicle front-rear direction and couples the frontmost cross member and the second cross member from the front together.

According to this configuration, it is possible to transmit a collision load received by the frontmost cross member during a vehicle front collision to the second cross member from the front via the coupling member, and it is possible to further improve the strength of the entire vehicle to withstand the vehicle front collision.

In the vehicle lower portion structure, the coupling member is preferably disposed in a position aligned with the reinforcement member in the vehicle front-rear direction.

According to this configuration, it is possible to reliably transmit a collision load received by the reinforcement member during a vehicle front collision to the second cross member via the frontmost cross member and the coupling member, and it is possible to further improve the strength of the entire vehicle to withstand the vehicle front collision.

### [Advantageous Effects of Invention]

As described above, according to the vehicle lower portion structure of the present invention, for a vehicle equipped with a battery, it is possible to improve the vehicle's strength to withstand collision loads during both a side collision and a front collision of the vehicle.

### [Brief Description of Drawings]

FIG. 1 is a plan view showing an overall configuration of a vehicle lower portion structure according to an embodiment of the present invention.
FIG. 2 is a cross-sectional view taken along line II-II of FIG. 1.
FIG. 3 is an enlarged perspective view showing a structure in which a reinforcement member for reinforcing a toeboard and a coupling member behind the reinforcement member are individually affixed to a frontmost cross member in FIG. 1.
FIG. 4 is an enlarged plan view showing a structure in which the reinforcement member and the coupling member are individually affixed to the frontmost cross member in FIG. 3.
FIG. 5 is an enlarged plan view showing a modified example of the structure in which the reinforcement member for reinforcing the toeboard is affixed to the frontmost cross member in FIG. 1, and linear beads are formed on the toeboard and the reinforcement member.
FIG. 6 is a cross-sectional explanatory diagram schematically illustrating a structure in which the reinforcement member is affixed to the frontmost cross member in FIG. 1 at a position forward of the position of a bolt that affixes the cross member to an intermediate frame.
FIG. 7 is a cross-sectional explanatory diagram schematically illustrating a modified example in which the reinforcement member and the intermediate frame of a battery in FIG. 1 are affixed at the same position to the frontmost cross member with a bolt.

### [Mode for Carrying Out the Invention]

A vehicle lower portion structure according to an embodiment of the present invention will be described below in detail while referring to the drawings.

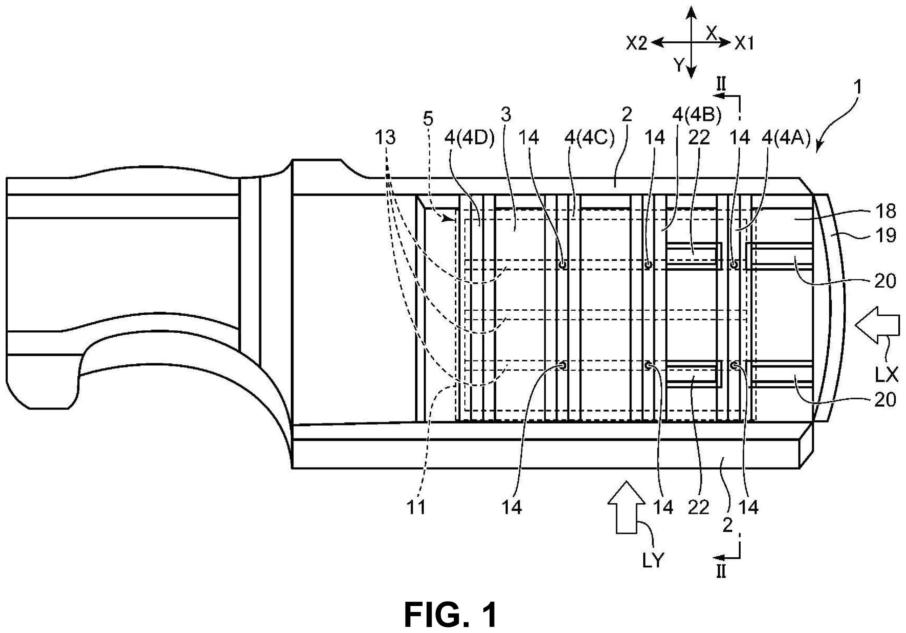

As shown in FIGS. 1 to 6, a vehicle body 1 to which a vehicle lower portion structure according to the present embodiment is applied includes: a pair of side sills 2 extending in a vehicle front-rear direction X at both ends in a vehicle width direction Y of the vehicle; a plurality of (four in FIG. 1) cross members 4 (4A to 4D) extending in the vehicle width direction Y between the pair of side sills 2 and disposed spaced apart from each other in the front-rear direction X; a floor panel 3 extending across an area between the pair of side sills 2 under the plurality of cross members 4 to form a bottom of the vehicle body 1; a battery 5 disposed under the plurality of cross members 4 and the floor panel 3; a toeboard 18 disposed on a front side X1 relative to the frontmost cross member 4A; and a plurality of (two in the present embodiment) reinforcement members 20 for reinforcing the toeboard 18.

Moreover, the vehicle body 1 of the present embodiment includes a plurality of (two in the present embodiment) coupling members 22 that extend in the vehicle front-rear direction X and couple the frontmost cross member 4A and the second cross member 4B from the front together, and a front panel 19 that extends upward from an upper end of the toeboard 18; however, these members are not essential to the configuration of the present invention.

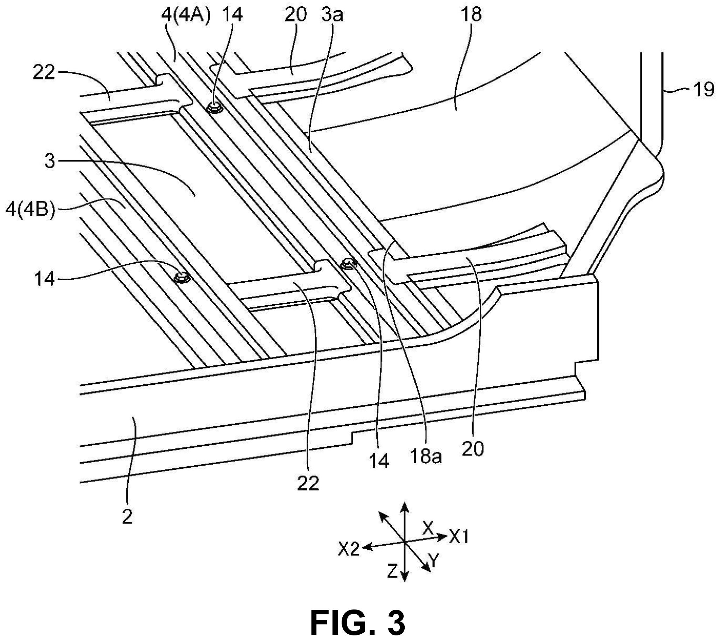

The toeboard 18 is disposed on the front side X1 relative to the frontmost cross member 4A among the plurality of cross members 4 (4A to 4D). As shown in FIG. 3, the toeboard 18 has a shape that extends in the vehicle width direction Y and is curved upward towards the vehicle front side X1. In FIG. 3, the toeboard 18 extends in an arc-shaped curve from a front end 3a of the floor panel 3 to the front panel 19.

Two reinforcement members 20 for reinforcing the toeboard 18 are affixed in a range in the front-rear direction X including a rear end portion 18a of the toeboard 18. The two reinforcement members 20 are disposed at positions spaced apart from each other in the vehicle width direction Y and bilaterally symmetrical with respect to a middle position of the toeboard 18 in the vehicle width direction Y.

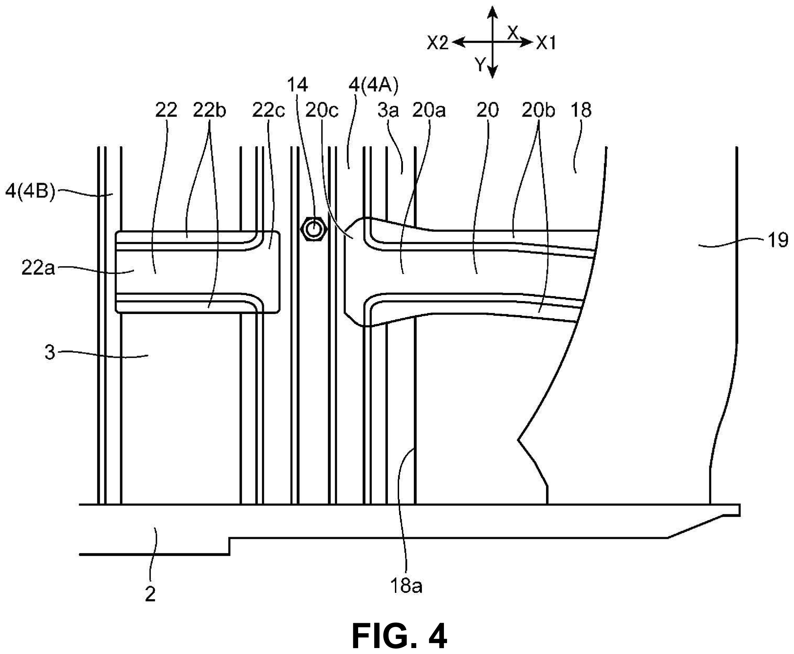

Specifically, as shown in FIG. 1 and FIGS. 3 to 6, each reinforcement member 20 has a shape that extends from the rear end portion 18a of the toeboard 18 toward the vehicle front side X1. More specifically, as shown in FIGS. 4 to 5, the reinforcement member 20 has a main body portion 20a that is curved and extends in the front-rear direction X along an upper surface of the toeboard 18, both widthwise end portions 20b that is curved and extend in the front-rear direction X along both ends of the main body portion 20a in the vehicle width direction Y, and a rear end portion 20c that continues to a rear side X2 of the main body portion 20a. The reinforcement member 20 has a so-called ski board shape as shown in FIG. 3 when seen in its entirety.

The main body portion 20a and both widthwise end portions 20b form a hat shape. Thus, the main body portion 20a bulges upward from the upper surface of the toeboard 18, and both widthwise end portions 20b are affixed to the upper surface of the toeboard 18 by spot welding or the like.

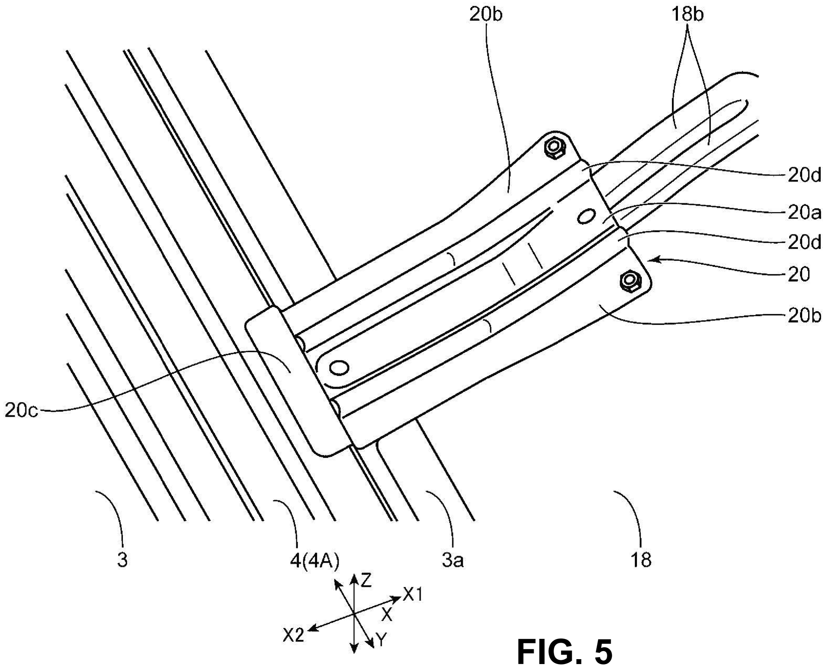

Note that if the upper surface of the toeboard 18 has a bead 18b (an upwardly bulging, band-shaped protruding portion) extending in the front-rear direction X as shown in FIG. 5, a bead 20d extending in the front-rear direction X may be formed between the main body portion 20a and each of both widthwise end portions 20b of the reinforcement member 20 as a portion that fits with the bead 18b. Consequently, the rigidity of the toeboard 18 and the reinforcement member 20 during a vehicle front collision is improved, and a collision load is smoothly transmitted to the frontmost cross member 4A. Further, both widthwise end portions 20b of the reinforcement member 20 may be affixed to the toeboard 18 not only by spot welding but also by bolting.

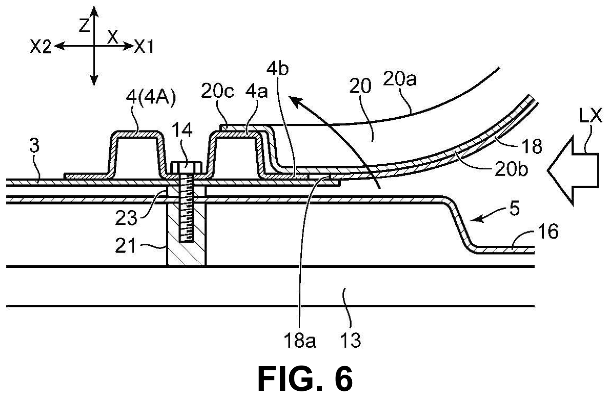

As shown in FIGS. 4 to 5, the rear end portion 20c of the reinforcement member 20 is affixed to the frontmost cross member 4A. More specifically, as shown in FIG. 1 and FIGS. 3 to 6, the rear end portion 20c of the reinforcement member 20 is affixed above the front end portion of the frontmost cross member 4A by spot welding or the like. Specifically, as shown in FIG. 6, the rear end portion 20c is spot-welded to the front end portion of the upper surface of the main body portion 4a of the hat-shaped cross member 4A, and the main body portion 20a (and both widthwise end portions 20b) of the reinforcement member 20 overlaps a flange portion 4b of the cross member 4A. The main body portion 20a is preferably abutted on the front surface of the main body portion 4a of the cross member 4A from the front side X1; however, in FIG. 6, the main body portion 20a is spaced apart from the front surface of the main body portion 4a to facilitate understanding of the configuration of the reinforcement member 20.

In the present embodiment, as shown in FIG. 6, a position where the reinforcement member 20 and the frontmost cross member 4A are affixed together (the position of the rear end portion 20c of the reinforcement member 20) is on the vehicle front side X1 relative to a position where the cross member 4A and an intermediate frame 13 are affixed together (the position of the bolt 14 described later).

Here, if the bolt 14 is positioned on the rear side X2 of the rear end portion 20c of the reinforcement member 20 and within a range of the rear end portion 20c in the vehicle width direction Y and the periphery thereof as shown in FIG. 4, the load transmitted from the reinforcement member 20 to the cross member 4A during the vehicle front collision can be effectively transmitted to the intermediate frame 13 of the battery 5 via the bolt 14.

As shown in FIG. 1 and FIGS. 3 to 4, each coupling member 22 is configured to extend in the vehicle front-rear direction X and couple the frontmost cross member 4A and the second cross member 4B from the front together. Specifically, as shown in FIG. 4, the coupling member 22 has a main body portion 22a and both widthwise end portions 22b that form a hat shape, and front-rear end portions 22c affixed respectively to the cross members 4A and 4B spaced apart each other in the front-rear direction X (note that the front-rear end portion 22c on the cross member 4B side is omitted in FIG. 4). Both widthwise end portions 22b are spot-welded to the floor panel 3. The front-rear end portions 22c are spot-welded to the cross members 4A and 4B, respectively. The main body portion 22a of the coupling member 22 is preferably abutted on the opposing surfaces of the cross members 4A and 4B in the front-rear direction.

The coupling member 22 of the present embodiment is disposed in a position aligned with the reinforcement member 20 in the vehicle width direction Y. Therefore, a collision load received by the reinforcement member 20 during a vehicle front collision is easily transmitted to the second cross member 4B via the coupling member 22.

The battery 5 has a configuration including at least a battery housing 11, battery cells 12, and the intermediate frame 13.

As shown in FIGS. 1 to 2, the battery 5 of the present embodiment includes a plurality of battery modules 15, the battery housing 11 accommodating the plurality of battery modules 15, and at least one (three in the present embodiment) intermediate frame 13, which constitute one unit (a battery pack). Each battery module 15 is constituted by a plurality of battery cells 12. In the present embodiment, the battery modules 15 are disposed in a matrix under the floor panel 3 such that four battery modules 15 are arranged in the vehicle width direction Y and a plurality of battery modules 15 are arranged in the front-rear direction X.

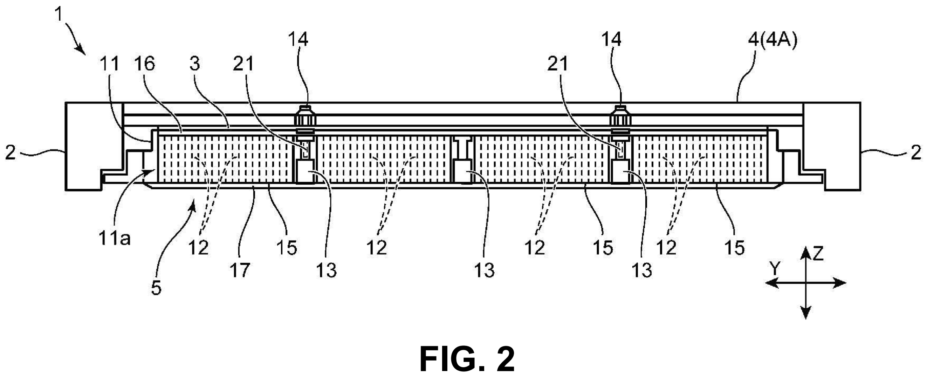

The battery housing 11 has a main body portion of a rectangular frame body as shown in FIG. 1, a lid portion 16 that closes an opening in an up-down direction Z as shown in FIG. 2, and a bottom plate portion 17.

As shown in FIGS. 1 to 2, three intermediate frames 13 extend in the front-rear direction X within an area that is occupied by the battery housing 11 in plan view, and are spaced apart from each other in the vehicle width direction Y. Specifically, in the present embodiment, as shown in FIG. 2, the intermediate frames 13 are installed in an inside 11a of the battery housing 11. More specifically, the intermediate frames 13 are disposed under the lid portion 16 and on an upper surface of the bottom plate portion 17.

Each intermediate frame 13 is disposed between the battery modules 15 at the position in the vehicle width direction Y shown in FIG. 2. Both ends of each intermediate frame 13 in the front-rear direction X are coupled to both ends of the battery housing 11 (specifically, the main body portion made of a frame body) in the front-rear direction X (see FIG. 1).

As shown in FIG. 1, at least one of the plurality of (four) cross members 4 (4A to 4D), that is, three of the four cross members 4 (4A to 4D) in the present embodiment, namely, the frontmost cross member 4A, the second cross member 4B, and the third cross member 4C are coupled, more particularly fastened to two of the three intermediate frames 13, on both ends in the vehicle width direction Y, respectively with the bolts 14 as fastening members. In other words, each of the three cross members 4A to 4C and each of the two intermediate frames 13 are fastened together with the bolt 14 to form a structure that forms a plurality of rectangular closed spaces, i.e., a lattice structure. Note that the bolt 14 is a broad concept as a fastening member, and includes a part called a screw.

Note that, as shown in FIGS. 1 to 4, at least the frontmost cross member 4A among the four cross members 4 (4A to 4D) needs to be affixed to the intermediate frames 13 by fastening with the bolt 14.

In the present embodiment, as shown in FIG. 2, the bolt 14 passes through the cross member 4, the floor panel 3, and the lid portion 16 to reach the inside 11a of the battery housing 11, and is fastened to the cross member 4 via an inner collar 21. In a through-hole of the lid portion 16 of the battery 5 through which the bolt 14 passes through and the periphery of the through-hole, a flow of liquid is prevented by a waterproof structure including the inner collar 21, an outer collar 23, and a seal (not shown).

Note that the intermediate frames 13 of the battery 5 may be disposed on the upper surface side of the lid portion 16.

The cross member 4 and the intermediate frame 13 may be coupled not only by fastening with the bolt 14 as described above, but also by different means, for example, by fastening with a blind rivet.

### (Characteristics of the Present Embodiment)

(1) As shown in FIGS. 1 to 6, the vehicle body 1 having the vehicle lower portion structure of the present embodiment includes: the plurality of cross members 4 (4A to 4D); the toeboard 18 that is disposed on the front side X1 relative to the frontmost cross member 4A, and has a shape extending in the vehicle width direction Y and curved upward toward the vehicle front side X1; the reinforcement member 20 that is affixed in a range in the front-rear direction X including the rear end portion 18a of the toeboard 18 to reinforce the toeboard 18; and the battery 5 disposed under the plurality of cross members 4 (4A to 4D).

In the vehicle body 1, as shown in FIGS. 4 to 5, the rear end portion 20c of the reinforcement member 20 is affixed to the frontmost cross member 4A. Moreover, as shown in FIGS. 1 to 2, the battery 5 has at least one intermediate frame 13 that extends in the front-rear direction X within the area that is occupied by the battery housing 11 in plan view. As shown in FIGS. 1 to 4, the frontmost cross member 4A is affixed to the intermediate frame 13 of the battery 5 with the bolt 14 or the like.

According to this configuration, since the rear end portion 20c of the reinforcement member 20 for reinforcing the toeboard 18 is affixed to the frontmost cross member 4A, a collision load LX (see FIG. 1) input to the reinforcement member 20 during a vehicle front collision can be received by both the reinforcement member 20 and the frontmost cross member 4A. Further, since the frontmost cross member 4A is affixed to the intermediate frame 13 of the battery 5 together with the reinforcement member 20, a collision load LY (see FIG. 1) input to the frontmost cross member 4A during a vehicle side collision can be received by a united body of the cross member 4A, the reinforcement member 20, and the intermediate frame 13. As a result, in the vehicle equipped with the battery 5, it is possible to improve the strength to withstand both the side collision and the front collision of the vehicle. Therefore, in this vehicle, the battery 5 under the cross members 4 can be reliably protected from the collision loads.

(2)
In the vehicle lower portion structure of the present embodiment, as shown in FIG. 1 and FIGS. 3 to 6, the reinforcement member 20 extends from the rear end portion 18a of the toeboard 18 to the vehicle front side X1.

In this configuration, since the reinforcement member 20 has high rigidity in the vehicle front-rear direction X, the strength of the reinforcement member 20 to withstand a collision load during a vehicle front collision is improved.

(3)
In the vehicle lower portion structure of the present embodiment, as shown in FIG. 1 and FIGS. 3 to 6, the rear end portion 20c of the reinforcement member 20 is affixed above the front end portion of the frontmost cross member 4A.

In this configuration, as shown in FIG. 6, when the reinforcement member 20 receives the collision load LX during a vehicle front collision, the reinforcement member 20 is deformed in a direction of lifting the reinforcement member 20 upward of the frontmost cross member 4A, and therefore it is possible to reduce the load transmitted to the battery 5 under the cross members.

(4)
In the vehicle lower portion structure of the present embodiment, as shown in FIGS. 4 to 6, the position where the reinforcement member 20 and the frontmost cross member 4A are affixed together (the position of the rear end portion 20c of the reinforcement member 20) is on the vehicle front side X1 relative to a position where the cross member 4A and the intermediate frame 13 are affixed together (the position of the bolt 14).

According to this configuration, the position where the cross member and the intermediate frame 13 are affixed together (the position of the rear end portion 20c of the reinforcement member 20) can be freely set without being affected by the position where the reinforcement member 20 and the frontmost cross member 4A are affixed together (the position of the bolt 14). Therefore, the position where the cross member and intermediate frame 13 are affixed together (the position of the bolt 14) can be set to match the arrangement of components in a vehicle cabin (for example, an occupant protection foam pad on the floor).

Moreover, since the collision load received by the reinforcement member 20 during the vehicle front collision is transmitted to the frontmost cross member 4A and then to the intermediate frame 13 of the battery 5, it is possible to reduce the load transmitted to the intermediate frame 13 of the battery 5.

Furthermore, as shown in FIG. 6, when the toeboard 18 and the reinforcement member 20 receive the collision load LX during the front collision, the toeboard 18 and the reinforcement member 20 are deformed and lifted upward of the frontmost cross member 4A, and, consequently the load transmitted to the battery 5 via the cross member 4A and the bolt 14 is reduced.

(5)
In the vehicle lower portion structure of the present embodiment, as shown in FIGS. 1 to 6, the frontmost cross member 4A and the intermediate frame 13 are affixed together by fastening of the bolt 14.

According to this configuration, the collision loads received by the frontmost cross member 4A during a front collision and a side collision of the vehicle can be reliably transmitted to the intermediate frame 13 via the bolt, and the strength of the entire vehicle to withstand the vehicle front collision can be further improved.

(6)
As shown in FIG. 1 and FIGS. 3 to 4, the vehicle lower portion structure of the present embodiment further includes the coupling member 22 that extends in the vehicle front-rear direction X and couples the frontmost cross member 4A and the second cross member 4B from the front together. Note that, in this configuration, a fastening position (with a bolt or the like) of the coupling member 22 and a fastening position (with a bolt or the like) of the reinforcement member 20 (so-called ski board) preferably coincide in the vehicle width direction Y.

According to this configuration, the collision load received by the frontmost cross member 4A during a vehicle front collision can be transmitted to the second cross member 4B from the front via the coupling member 22, and the strength of the entire vehicle to withstand the vehicle front collision can be further improved.

(7)
In the vehicle lower portion structure of the present embodiment, as shown in FIGS. 3 and 4, the coupling member 22 is disposed in a position aligned with the reinforcement member 20 in the vehicle width direction Y.

According to this configuration, the collision load received by the reinforcement member 20 during a vehicle front collision can be reliably transmitted to the frontmost cross member 4A and the second cross member 4B via the coupling member 22, and the strength of the entire vehicle to withstand the vehicle front collision can be further improved.

### (Modified Examples)

(A) In the above-described embodiment, as shown in FIG. 6, the position where the reinforcement member 20 and the frontmost cross member 4A are affixed together (the position of the rear end portion 20c of the reinforcement member 20) is on the vehicle front side X1 relative to the position where the cross member 4A and the intermediate frame 13 are affixed together (the position of the bolt 14), but the present invention is not limited to this.

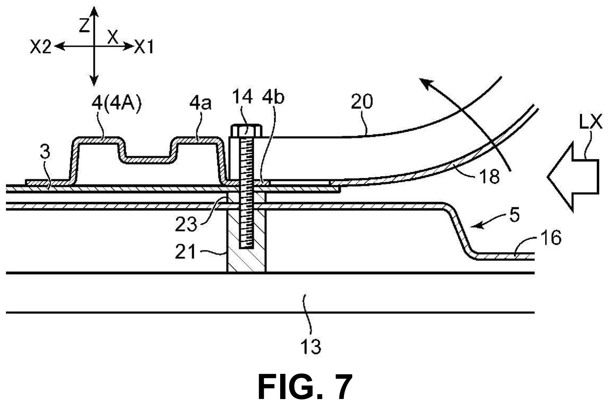

As a modified example of the present invention, as shown in FIG. 7, the position where the reinforcement member 20 and the frontmost cross member 4A are affixed together may overlap the position where the cross member 4A and the intermediate frame 13 are affixed together (the position of the bolt 14) in the vehicle front-rear direction X and the vehicle width direction Y. For example, as shown in FIG. 7, the reinforcement member 20 (specifically, the main body portion 20a), the front flange portion 4b of the cross member 4A, and an intermediate frame 13b are fastened with the bolt 14 (via the inner collar 21).

According to such a configuration of the modified example shown in FIG. 7, since a collision load received by the reinforcement member 20 during a vehicle front collision is transmitted to and distributed between both the frontmost cross member 4A and the intermediate frame 13 via the affixed position (the position of the bolt 14) common to the reinforcement member 20, the frontmost cross member 4A, and the intermediate frame 13, the strength of the entire vehicle to withstand the vehicle front collision can be improved.

Moreover, even in the modified example of FIG. 7, when the collision load LX is received during the front collision, the toeboard 18 and the reinforcement member 20 are deformed and lifted upward of the frontmost cross member 4A, and, consequently, the load transmitted to the battery 5 via the cross member 4A and the bolt 14 is reduced.

(B)
In the above-described embodiment, although the coupling member 22 that couples the frontmost cross member 4A and the second cross member 4B is disposed in the position aligned with the reinforcement member 20 in the vehicle width direction Y, the present invention is not limited to this. At least one coupling member 22 is required, and the coupling member 22 may be disposed at a middle position of the frontmost cross member 4A in the vehicle width direction Y, or a greater number of coupling members 22 than two reinforcement members 20 may be disposed.

### [Reference Signs List]

- 1: vehicle body
- 2: side sill
- 3: floor panel
- 4: cross member
- 5: battery
- 11: battery housing
- 12: battery cell
- 13: intermediate frame
- 14: bolt
- 15: battery module
- 18: toeboard
- 20: reinforcement member
- 22: coupling member

## Claims

1. A vehicle lower portion structure comprising:
a plurality of cross members (4) extending in a vehicle width direction of a vehicle and disposed spaced apart from each other in a vehicle front-rear direction;
a toeboard (18) that is disposed forward of a frontmost cross member (4A) among the plurality of cross members, and has a shape extending in the vehicle width direction and curved upward toward a vehicle front;
a reinforcement member (20) affixed to the toeboard (18) to reinforce the toeboard (18); and
a battery (5) that includes battery cells and a battery housing (11) accommodating the battery cells (12), and is disposed under the plurality of cross members (4),
the vehicle lower portion structure being **characterized in that**
a rear end portion (20c) of the reinforcement member (20) is affixed to the frontmost cross member (4A),
the battery (5) has at least one intermediate frame (13) extending in the front-rear direction (X) within an area that is occupied by the battery housing (11) in plan view, and
the frontmost cross member (4A) is affixed to the intermediate frame (13).

2. The vehicle lower portion structure according to claim 1, **characterized in that** the reinforcement member (20) extends from where it is fixed to the frontmost cross member (4A) across the rear end portion (18a) of the toeboard (18) toward the vehicle front.

3. The vehicle lower portion structure according to claim 2, **characterized in that** the reinforcement member has a main body portion (20a) that extends in the front-rear direction (X) along an upper surface of the toeboard (18), the main body portion (20a) forming a hat shape profile together with widthwise end portions (20b) provided on both sides of the main body portion (20a) in the vehicle width direction, the widthwise end portions (20b) being affixed to the upper surface of the toeboard (18).

4. The vehicle lower portion structure according to claim 3, **characterized in that** the upper surface of the toeboard (18) has a bead (18b) extending in the front-rear direction (X) beneath the main body portion (20a).

5. The vehicle lower portion structure according to any one of the preceding claims, **characterized in that** the rear end portion (20c) of the reinforcement member (20) is affixed from above on a front end portion of the frontmost cross member (4A).

6. The vehicle lower portion structure according to any one of the preceding claims, **characterized in that** a main body portion (20a) of the of the reinforcement member (20) is abutted on a front surface of a main body portion (4a) of the cross member (4A) from the front side (X1).

7. The vehicle lower portion structure according to any one of the preceding claims, **characterized in that** a position where the cross member (4A) and the intermediate frame (13) are affixed together overlaps in the vehicle width direction with a vehicle width extension of the reinforcement member (20).

8. The vehicle lower portion structure according to any one of claims 1 to 7, **characterized in that** a position where the reinforcement member (20) and the frontmost cross member (4A) are affixed together is located further forward in the vehicle front-rear direction than a position where the cross member (4A) and the intermediate frame (13) are affixed together.

9. The vehicle lower portion structure according to any one of claims 1 to 7, **characterized in that** a position where the reinforcement member (20) and the frontmost cross member (4A) are affixed together overlaps a position where the cross member (4A) and the intermediate frame (13) are affixed together in the vehicle front-rear direction and the vehicle width direction, wherein preferably, the reinforcement member (20), the frontmost cross member (4A) and the intermediate frame (13) are affixed together by a bolt (14).

10. The vehicle lower portion structure according to any one of the preceding claims, **characterized in that** the frontmost cross member (4A) and the intermediate frame (13) are affixed together by fastening of a bolt (14).

11. The vehicle lower portion structure according to any one of the preceding claims, **characterized in that** the frontmost cross member (4A) has a hat-shaped profile formed by at least one main body portion (4a) and flange portions (4b) arranged on both sides of the main body portion, wherein preferably, the intermediate frame (13) is affixed to one of the flange portions (4b).

12. The vehicle lower portion structure according to any one of the preceding claims, **characterized by** further comprising a coupling member (22) that extends in the vehicle front-rear direction and couples the frontmost cross member (4A) and a second cross member (4B) from the front together.

13. The vehicle lower portion structure according to claim 7, **characterized in that** the coupling member (22) is disposed in a position aligned with the reinforcement member (20) in the vehicle width direction.

14. The vehicle lower portion structure according to claim 7 or 8, **characterized in that** the second cross member (4B) is fastened to the intermediate frame (13).

15. A vehicle comprising the vehicle lower portion structure according to any one of the preceding claims.
